# FASCICULE DE BREVET EUROPEEN

(11) **EP 3 543 904 B1**
(45) Date de publication et mention de la délivrance du brevet: **09.12.2026**
(21) Numéro de dépôt: 19161515.2
(22) Date de dépôt: 08.03.2019
(51) Int. Cl.: G06V 10/75, G06V 20/00, G06F 18/2415

(54) **PROCÉDÉ DE CONTRÔLE DE DÉTECTION DE SCÈNES ET APPAREIL CORRESPONDANT**
VERFAHREN ZUR KONTROLLE DER ERFASSUNG VON SZENEN UND ENTSPRECHENDES GERÄT
METHOD FOR CONTROLLING DETECTION OF SCENES AND CORRESPONDING APPARATUS

(30) Priorité: 19.03.2018 FR 1852333
(43) Date de publication de la demande: 25.09.2019
(73) Titulaire: STMicroelectronics (Rousset) SAS, 13790 Rousset (FR)
(72) Inventeur: FOLLIOT, Laurent, 06620 GOURDON (FR); DEMAJ, Pierre, 06200 NICE (FR)
(74) Mandataire: Casalonga

(56) Documents cités:
- EP-A1- 3 459 453
- WO-A1-2017/199305
- US-A1- 2011 137 831
- ZHANG YANG ET AL: "A pervasive indoor and outdoor scenario identification algorithm based on the sensing data and human activity", 2016 FOURTH INTERNATIONAL CONFERENCE ON UBIQUITOUS POSITIONING, INDOOR NAVIGATION AND LOCATION BASED SERVICES (UPINLBS), 2 November 2016 (2016-11-02), IEEE, Piscataway, NJ, USA, pages 240 - 247, XP033038858, DOI: 10.1109/UPINLBS.2016.7809979
- CHU TIANXING ET AL: "Contextual Thinking for Inference and Prediction of Daily Activities by Mining Smartphone Data", GNSS 2015 - PROCEEDINGS OF THE 28TH INTERNATIONAL TECHNICAL MEETING OF THE SATELLITE DIVISION OF THE INSTITUTE OF NAVIGATION (ION GNSS+ 2015), 18 September 2015 (2015-09-18), THE INSTITUTE OF NAVIGATION, MANASSAS, VA , USA, pages 2511 - 2517, XP056010836
- OTEBOLAKU ABAYOMI MORADEYO ET AL: "User context recognition using smartphone sensors and classification models", JOURNAL OF NETWORK AND COMPUTER APPLICATIONS, ACADEMIC PRESS, vol. 66, 19 March 2016 (2016-03-19), NEW YORK, NY, US, pages 33 - 51, XP029501636, ISSN: 1084-8045, DOI: 10.1016/J.JNCA.2016.03.013

## Description

Des modes de mise en œuvre et de réalisation de l'invention concernent la détection en temps réel d'une scène par un appareil, notamment mais non exclusivement un appareil de communication sans fil, par exemple un téléphone mobile cellulaire intelligent (« smartphone ») ou encore une tablette numérique, équipé d'au moins un capteur comme par exemple un accéléromètre, et plus particulièrement l'amélioration de la fiabilité des décisions fournies par un algorithme de classification avant leur filtrage.

Une scène s'entend dans un sens très large comme englobant notamment une scène caractéristique de l'environnement dans lequel se trouve l'appareil, que l'appareil soit porté par un utilisateur susceptible d'être mobile, par exemple un téléphone mobile cellulaire, (scène du type « Bus », « train », « restaurant », « bureau »...), ou que l'appareil soit un objet fixe, connecté ou non, (radiateur par exemple dans une application de domotique), la scène caractéristique de l'environnement pouvant être par exemple du type « pièce humide », « pièce sèche », « jour », « nuit », « volets fermés », « volets ouverts » ... etc.

Une scène peut également englober une scène caractéristique d'une activité pratiquée par le porteur de l'appareil, par exemple une montre intelligente (« smart watch »), une telle scène pouvant être alors par exemple « marche », « course à pied », etc...

Bien que l'invention puisse s'appliquer à tout type d'appareil et à tout type de scène, on va maintenant citer plus précisément les appareils de communication sans fil.

Certains appareils de communication sans fil comme par exemple certains types de « smartphones » ou de tablettes sont capables aujourd'hui d'effectuer des détections de scène ce qui permet de déterminer dans quel environnement se situe l'utilisateur du téléphone ou de la tablette. Cela peut ainsi permettre à une tierce partie, par exemple un annonceur publicitaire ou un organisme culturel par exemple d'envoyer des informations pertinentes en liaison avec le lieu dans lequel se situe l'utilisateur de l'appareil.

Ainsi, par exemple si l'utilisateur se situe dans un lieu touristique donné, on peut lui envoyer ainsi des adresses de restaurant à proximité de l'endroit où il se trouve. De même, on peut également lui envoyer des informations relatives à certains monuments qui se situent à proximité de l'endroit où il se trouve.

Par détection de scène, on entend notamment une discrimination de la scène dans laquelle se trouve l'appareil de communication sans fil. Plusieurs solutions connues existent pour détecter (discriminer) une scène. Ces solutions utilisent par exemple un ou plusieurs capteurs dédiés associés généralement à un algorithme spécifique.

WO2017199305 A1 décrit un dispositif de traitement d'informations pour détecter avec précision une période de déplacement lorsque des mouvements varient en fonction d'un sujet, de l'environnement entourant le sujet ou de l'état du sujet.

Parmi les algorithmes spécifiques, on peut citer les classifieurs ou des arbres de décisions, bien connus de l'homme du métier dans la détection de scènes. On peut citer notamment un algorithme du type réseau de neurones connu par l'homme du métier qui peut par exemple se référer à toutes fins utiles à l'ouvrage de Martin T Hagan et Howard B Demuth intitulé Neural Network Design (2nd Edition), 1er septembre 2014 ou encore un algorithme connu par l'homme du métier sous la dénomination GMM (« Gaussian Mixture Model »), l'homme du métier pouvant par exemple se référer à toutes fins utiles aux diapositives (tutorial slides) de Andrew Moore intitulées « Clustering with Gaussian Mixtures » disponibles sur le site internet https://www.autonlab.org/tutorials/gmm.html.

Ces deux algorithmes sont également configurés pour délivrer une probabilité de confiance pour chaque scène détectée.

On peut également citer comme algorithme de classification, un algorithme du type méta algorithme de classification ou « méta classifieur », c'est-à-dire un algorithme qui se situe sur une couche supérieure à celle contenant plusieurs algorithmes de classification.

Chaque algorithme de classification fournit une décision quant à une scène détectée et le méta classifieur compile les décisions fournies par les différents algorithmes de classification, pour délivrer une décision finale, par exemple au moyen d'un vote majoritaire ou d'une moyenne.

Les « méta classifieurs » sont plus performants que les classifieurs classiques mais restent néanmoins sujets à de possibles erreurs de détection. En outre ils sont plus compliqués à implémenter, en particulier en termes de taille mémoire, et nécessitent des phases d'apprentissage plus complexes.

Il a donc été proposé dans la demande de brevet français déposée sous le n°1754080 un « méta filtre » permettant d'exploiter la corrélation temporelle entre deux décisions consécutive. Le méta filtre opère sur des décisions successives délivrées par l'algorithme de classification, quel que soit son type et y compris un méta classifieur.

Malgré cela, la détection de scènes peut rester sujette à des erreurs de détection dans certains cas.

Il existe donc un besoin d'améliorer encore la fiabilité des décisions fournies par un algorithme de classification, quel que soit son type, et ce de façon simple à mettre en œuvre.

Il a été observé par les inventeurs que certaines transitions entre une première scène et une deuxième scène sont peu probables, voire impossibles pour l'utilisateur de l'appareil.

Aussi, selon un mode de mise en œuvre et de réalisation, est-il proposé d'exploiter les habitudes de l'utilisateur et plus particulièrement des probabilités de transition entre les scènes successivement détectées, dans le but d'affiner la détection de scènes, selon un procédé de contrôle d'une détection de scènes par un appareil parmi un ensemble de scènes de référence possibles, ledit procédé et ledit appareil étant définis dans les revendications jointes. L'expérience utilisateur est avantageusement un paramètre pris en considération dans la détection de scènes. En effet, ladite première probabilité de transition permet de quantifier la probabilité que l'utilisateur transite d'une scène à une autre.

Certaines transitions d'une scène à une autre sont peu probables, voire impossibles.

Ainsi, en prenant en compte ce paramètre, la probabilité de confiance initiale associée à la scène courante détectée est affinée.

Egalement, lors du traitement de filtrage par exemple un méta-filtre, la probabilité de confiance mise à jour et associée à la nouvelle scène courante détectée permet de réduire, voire de supprimer le bruit perturbant le méta filtre avant toute autre décision, ce qui offre de meilleures performances au méta-filtre.

Autrement dit, dans la mise à jour de la probabilité de confiance dudit procédé, on pondère la probabilité de confiance initiale associée à ladite nouvelle scène courante détectée, par ladite première probabilité de transition.

Il est préférable de mettre à jour ladite première probabilité de transition et cela durant toute la vie de l'appareil de l'utilisateur. Cela permet de s'adapter à l'évolution de l'expérience de l'utilisateur détenant l'appareil.

Par intervalle de temps donné, on entend par exemple une durée correspondant à N transitions observées par exemple sur une fenêtre non glissante.

Le nombre N est par exemple défini en fonction du corpus des scènes de référence.

Cela peut être réalisé par exemple par un compteur qui compte les transitions jusqu'à N transitions.

Selon des modes de mise en œuvre, ladite première valeur fixe peut par exemple être comprise entre 0.01 et 0.05, et/ou ladite deuxième valeur fixe peut par exemple être comprise entre 0.01 et 0.05.

Selon des modes de mise en œuvre, si l'algorithme de classification ne délivre pas ladite probabilité de confiance initiale associée à ladite nouvelle scène courante détectée, on peut alors affecter à ladite nouvelle scène courante détectée une probabilité de confiance ayant une valeur arbitraire.

Par exemple, si la valeur de la probabilité de confiance initiale n'est pas disponible, on considère qu'elle a une valeur fixée à 100%. Dans ce cas, la pondération par la première probabilité de transition est réalisée sur la probabilité ayant ladite valeur fixée à 100%.

Le traitement de mise à jour des probabilités de confiance initiales est compatible avec tout type d'algorithme de classification mais également avec tout type de traitement de filtrage effectué à partir de probabilités associées aux scènes détectées par l'algorithme de classification.

Ce traitement de mise à jour des probabilités de confiance initiales est en particulier compatible, lorsqu'il est prévu une affectation d'un identifiant à chaque scène de référence, avec un traitement de filtrage des scènes courantes détectées effectué non seulement à partir de la probabilité de confiance mise à jour associée à chaque nouvelle scène courante détectée, mais également à partir de l'identifiant de chaque nouvelle scène courante détectée. (Chaque scène détectée a effectivement un identifiant puisque chaque scène détectée est l'une des scènes référence qui ont chacune un identifiant).

Un traitement de filtrage de ce type est par exemple décrit dans la demande de brevet français précitée n°1754080.

On en rappelle ici quelques caractéristiques.

Le traitement de filtrage est un traitement de filtrage temporel glissant de ces scènes courantes détectées sur une fenêtre de filtrage de taille M, à partir de l'identifiant de chaque nouvelle scène courante détectée prise en compte dans ladite fenêtre et de la probabilité de confiance mise à jour associée à cette nouvelle scène courante détectée.

La valeur de M définit la taille du filtre et sa latence (de l'ordre de M/2) et contribue à sa précision. L'homme du métier saura déterminer cette valeur en fonction de l'application envisagée et des performances souhaitées.

Cela étant une valeur de 15 pour M peut être un bon compromis.

Ce traitement de filtrage est compatible avec tout type d'algorithme de classification.

Pour un algorithme de classification configuré pour délivrer à chaque instant de détection une seule scène détectée, on peut prévoir un registre, par exemple un registre à décalage, de taille M (1xM) pour former ladite fenêtre de taille M.

Ainsi en particulier, on peut prévoir un moyen de stockage comportant un registre à décalage de taille M formant ladite fenêtre de taille M, et pour chaque nouvelle scène courante détectée, on stocke son identifiant et la probabilité de confiance mise à jour associée, éventuellement normalisée, dans le registre, on effectue le traitement de filtrage en utilisant les M identifiants présents dans ledit registre et leur probabilité de confiance mise à jour associée, éventuellement normalisée, et on délivre comme scène détectée filtrée l'une des scènes possibles, c'est-à-dire l'une des scènes de référence.

Lorsqu'on décale le contenu du registre à chaque nouvelle scène courante détectée, l'identifiant qui en est extrait est l'identifiant temporellement le plus ancien. Mais bien entendu l'identifiant qui sera délivré après filtrage peut être n'importe quel identifiant du registre, par exemple celui de la scène qui vient d'être détecté ou bien celui d'une scène précédente.

Cela étant l'algorithme de classification peut être configuré pour délivrer à chaque instant de détection, un groupe de plusieurs scènes. C'est le cas par exemple pour un méta classifieur dans lequel on va utiliser à chaque instant de détection les différentes scènes détectées par les différents arbres de décision qui le composent sans utiliser l'étape ultime du vote majoritaire par exemple.

Ce peut être également le cas pour un réseau de neurones dont on utilise les différentes scènes et leur probabilité de confiance correspondante respectivement associées aux différents neurones de la couche de sortie.

Dans le cas d'un algorithme de classification (par exemple un méta classifieur ou un réseau de neurones) configuré pour délivrer à chaque instant de détection, un groupe de D scènes, avec D supérieur à 1, on peut prévoir, pour former la fenêtre de filtrage de taille M, un moyen de mémoire de taille plus importante capable de stocker une matrice de taille DxM (D étant le nombre de lignes et M le nombre de colonnes).

On peut alors stocker dans le moyen de stockage formant ladite fenêtre de taille M, pour chaque nouveau groupe de D scènes courantes détectées, les probabilités de confiance mises à jour, éventuellement normalisées, associées aux identifiants de ces D scènes courantes détectées, on effectue le traitement de filtrage en utilisant les DxM identifiants et leur probabilité de confiance mise à jour associée, éventuellement normalisée, et on délivre comme scène détectée filtrée l'une des scènes possibles, c'est-à-dire l'une des scènes de référence.

Le traitement de filtrage peut comprendre, en particulier lorsque le moyen de stockage comprend un registre à décalage de taille M,
une définition d'un nombre entier J supérieur ou égal à deux et inférieur ou égal à la partie entière de M/2, et pour chaque identifiant présent dans le registre encadré par 2J identifiants identiques,
une comparaison de cet identifiant encadré avec les 2J identifiants encadrants, et en cas d'une non identité de valeurs un remplacement de l'identifiant encadré par l'un des identifiants encadrants, et
une affectation à l'identifiant encadrant remplaçant ledit identifiant encadré, d'une probabilité de confiance mise à jour, éventuellement normalisée, calculée à partir des probabilités de confiance mises à jour, éventuellement normalisées, des 2J identifiants encadrants, par exemple la moyenne des probabilités de confiance, éventuellement normalisées, des 2J identifiants encadrants.

Ceci permet d'éliminer par exemple des erreurs isolées de détection.

Lorsque le moyen de stockage est adapté à un algorithme de classification configuré pour délivrer successivement des groupes de D scènes détectées, le traitement de filtrage qui vient d'être évoqué ci-avant pour notamment l'élimination des erreurs isolées, s'applique alors avantageusement sur la matrice DxM, ligne par ligne .

Selon un mode de mise en œuvre, compatible quelle que soit la configuration de l'algorithme de classification et donc quelle que soit la taille du moyen de stockage, le traitement de filtrage comprend pour chaque identifiant pris en compte plus d'une fois dans ledit moyen de stockage une sommation des probabilités de confiance mise à jour, éventuellement normalisées, qui lui sont associées, la scène détectée filtrée étant alors celle dont l'identifiant pris en compte dans le moyen de stockage possède la probabilité de confiance mise à jour cumulée, éventuellement normalisée, la plus élevée.

Selon une variante plus élaborée possible, également compatible quelle que soit la taille du moyen de stockage, permettant notamment de fournir une indication sur la variabilité du filtre, le traitement de filtrage comprend pour chaque identifiant pris en compte plus d'une fois dans ledit moyen de stockage une sommation des probabilités de confiance mise à jour, éventuellement normalisées, qui lui sont associées, une élaboration d'une fonction de densité de probabilités desdits identifiants centrée sur l'identifiant ayant la plus forte probabilité de confiance mise à jour cumulée, éventuellement normalisée, un calcul de la variance de cette fonction, un calcul d'un rapport entre la probabilité de confiance cumulée, éventuellement normalisée, la plus élevée et ladite variance et une comparaison de ce rapport à un seuil et une sélection de la scène détectée filtrée en fonction du résultat de ladite comparaison.

Cette variante permet ainsi d'apprécier le degré de confiance du filtre et de prendre une décision en conséquence.

Ainsi, si ledit rapport est inférieur au seuil ce qui peut résulter d'une variance importante, le degré de confiance est moindre et on peut alors décider de délivrer comme scène détectée en sortie du filtre, soit la scène qui présente effectivement la plus forte probabilité de confiance mise à jour cumulée mais en lui assignant une information la caractérisant comme « incertaine », soit la scène détectée filtrée temporellement précédente.

Si au contraire ledit rapport est supérieur ou égal au seuil ce qui peut résulter d'une variance faible, le degré de confiance est élevé et on peut alors décider de délivrer comme scène détectée en sortie du filtre la scène qui présente effectivement la plus forte probabilité de confiance mise à jour cumulée, éventuellement normalisée.

Selon un autre aspect, il est également proposé un appareil comprenant
des moyens de détection configurés pour détecter des scènes parmi un ensemble de scènes de références possibles à des instants de détection successifs à l'aide d'au moins un algorithme de classification, chaque nouvelle scène courante détectée étant affectée d'une probabilité de confiance initiale,
des moyens de calcul configurés pour mettre à jour ladite probabilité de confiance initiale en fonction d'une première probabilité de transition d'une scène précédemment détectée vers la nouvelle scène courante détectée,
des moyens de filtrage configurés pour effectuer un traitement de filtrage à partir d'au moins la probabilité de confiance mise à jour associée à chaque nouvelle scène courante détectée, et pour délivrer successivement des scènes détectées filtrées.

Selon un mode de réalisation, les moyens de calcul sont configurés pour mettre à jour ladite probabilité de confiance initiale associée à ladite nouvelle scène courante détectée, en effectuant une multiplication de ladite probabilité de confiance initiale par ladite première probabilité de transition.

Selon un mode de réalisation, les moyens de calcul sont configurés pour normaliser ladite probabilité de confiance mise à jour associée à ladite nouvelle scène courante détectée.

Selon un mode de réalisation, chaque transition d'une première scène parmi ledit ensemble de scènes de références possibles, vers une deuxième scène parmi ledit ensemble de scènes de références possibles, est affectée d'une première probabilité de transition ayant une valeur arbitraire ou mise à jour.

Selon un mode de réalisation, les moyens de calcul sont configurés pour mettre à jour ladite première probabilité de transition si, durant un intervalle de temps donné, au moins une transition de la première scène vers la deuxième scène est effectuée, et cette mise jour comprend un calcul d'une deuxième probabilité de transition pour chaque transition de ladite première scène vers chacune desdites deuxièmes scènes possibles parmi ledit ensemble de scènes de références possibles.

Selon un mode de réalisation, les moyens de calcul sont configurés pour mettre à jour la première probabilité de transition en augmentant sa valeur d'une valeur fixe si ladite deuxième probabilité de transition est supérieure à la première probabilité de transition.

Selon un mode de réalisation, les moyens de calcul sont configurés pour mettre à jour la première probabilité de transition en diminuant sa valeur d'une valeur fixe si ladite deuxième probabilité de transition est inférieure à la première probabilité de transition.

Selon un mode de réalisation, les moyens de calcul sont configurés pour mettre à jour chaque première probabilité de transition susceptible d'être mise à jour en utilisant un algorithme d'optimisation différentiable.

Selon un mode de réalisation, l'algorithme de classification est configuré pour délivrer ladite probabilité de confiance associée à ladite nouvelle scène courante détectée.

Selon un mode de réalisation, si l'algorithme de classification n'est pas configuré pour délivrer ladite probabilité de confiance associée à ladite nouvelle scène courante détectée, une probabilité de confiance ayant une valeur arbitraire est affectée à ladite nouvelle scène courante détectée.

Selon un mode de réalisation, chaque scène de référence est affectée d'un identifiant et les moyens de filtrage sont configurés pour effectuer un traitement de filtrage à partir de l'identifiant de chaque nouvelle scène courante détectée et de la probabilité de confiance mise à jour associée à chaque nouvelle scène courante détectée.

L'appareil peut être par exemple un téléphone mobile cellulaire ou une tablette numérique, ou tout type d'objet intelligent, en particulier une montre intelligente, connecté ou non à un réseau internet.

D'autres avantages et caractéristiques de l'invention apparaîtront à l'examen de la description détaillée de modes de mise en œuvre et de réalisation, nullement limitatifs, et des dessins annexés sur lesquels :

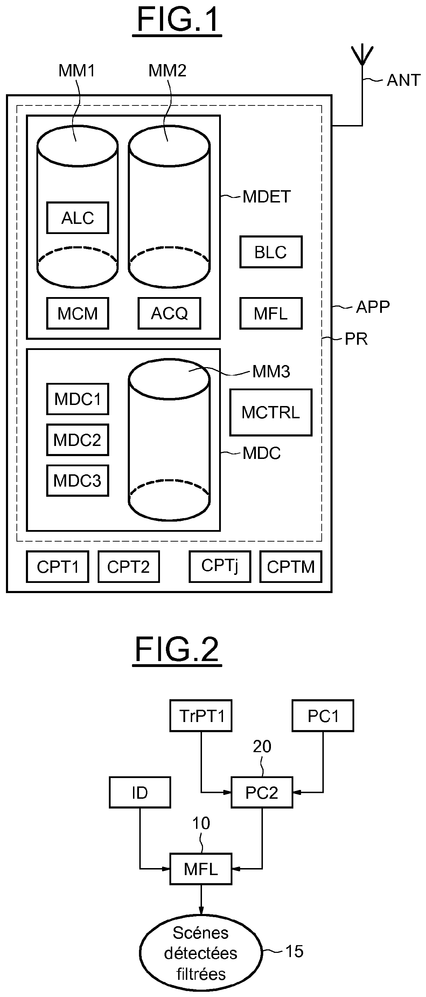

Les figures 1 à 5 illustrent schématiquement différents modes de mise en œuvre et de réalisation de l'invention.

Sur la figure 1, la référence APP désigne un appareil électronique que l'on considèrera être dans cet exemple non limitatif, un appareil de communication sans fil équipé d'une antenne ANT. Cet appareil peut être un téléphone mobile cellulaire tel qu'un téléphone intelligent (smartphone) ou encore une tablette numérique.

L'appareil APP comporte ici plusieurs capteurs de mesure CPT1-CPTj, j = 1 à M.

A titre indicatif, les capteurs CPTj peuvent être choisis dans le groupe formé par un accéléromètre, un gyroscope, un magnétomètre, un capteur audio tel qu'un microphone, un baromètre, un capteur de proximité, un capteur optique.

Bien entendu, l'appareil peut être équipé de plusieurs accéléromètres et/ou de plusieurs gyroscopes et/ou plusieurs magnétomètres et/ou de plusieurs capteurs audio et/ou d'un baromètre, et/ou d'un ou plusieurs capteurs de proximité, et/ou un ou plusieurs capteurs optiques.

Les capteurs audio sont des descripteurs utiles d'environnement. En effet, si l'appareil n'est pas en mouvement, alors le capteur audio peut être intéressant pour détecter la nature de cet environnement. Bien entendu, en fonction des applications, on peut utiliser soit des capteurs environnementaux du type accéléromètres voire gyroscopes ou magnétomètres, soit des capteurs audio ou alors une combinaison de ces deux types de capteurs ou encore d'autres types de capteurs, comme des capteurs non inertiels du type capteur de température, d'humidité et de luminosité.

Ces capteurs de mesure environnementaux, peuvent, en particulier dans une approche multimodale, former en combinaison avec un algorithme classique de discrimination ALC, par exemple du type arbre de décision, destiné à travailler par exemple sur des données brutes filtrées issues de ces capteurs, des moyens de détection MDET peuvent ainsi par exemple détecter si l'appareil APP si situe dans tel ou tel environnement (restaurant, véhicule en mouvement, etc...) ou si le porteur de cet appareil (par exemple une montre intelligente) réalise une activité spécifique (marcher, courir, faire du vélo, ...).

On suppose maintenant à titre d'exemple non limitatif que tous les capteurs environnementaux CPT1-CPTM contribuent à la détection de la scène et fournissent des données à des instants de mesure à l'algorithme de discrimination ALC pour permettre de détecter la scène.

Comme on le verra plus en détails ci-après, le contrôle de la détection de scènes obtenues à partir d'un algorithme de classification utilise un traitement de filtrage sur des identifiants de ces scènes et utilise des probabilités de confiance mises à jour et associées à ces scènes détectées.

Ce traitement de filtrage est mis en œuvre dans des moyens de filtrage MFL.

On va maintenant décrire un exemple non limitatif d'un algorithme de classification fournissant pour chaque scène détectée une probabilité de confiance initiale. Un tel algorithme est par exemple décrit dans la demande de brevet français déposée sous le n°1752947 et dont on rappelle ici certaines caractéristiques.

L'algorithme de discrimination mis en œuvre de façon logicielle dans les moyens MDET de détection de scène est ici un arbre de décision ayant réalisé une phase d'apprentissage sur une base de données de mesure des capteurs environnementaux. Un tel arbre de décision, est particulièrement simple à mettre en œuvre et ne nécessite que quelques kilooctets de mémoire et une fréquence de travail inférieure à 0.01 MHz.

Il est stocké dans une mémoire programme MM1.

L'arbre de décision ALC opère sur un vecteur d'attributs. L'arbre comprend une série de nœuds. Chaque nœud est affecté à un test sur un attribut.

A partir d'un nœud partent deux branches.

Par ailleurs, la sortie de l'arbre comporte des feuilles correspondant à des scènes de référence que l'appareil APP est censé détecter.

Ces scènes de référence peuvent être par exemple, sans que ceci ne soit limitatif, des scènes « BATEAU », « AVION », « VEHICULE », « MARCHE » représentatives par exemple de l'environnement dans lequel peut se trouver l'appareil APP, ici le téléphone.

Les moyens de détection MDET comportent également des moyens d'acquisition ACQ configurés pour acquérir des valeurs courantes des attributs à partir des données de mesure issues des capteurs.

Les moyens de détection MDET comportent des moyens de commande MCM configurés pour activer le module logiciel ALC avec les valeurs courantes des attributs de façon à parcourir un chemin au sein de l'arbre de décision et obtenir en sortie du chemin une scène parmi l'ensemble de scènes de références, cette scène obtenue formant la scène détectée.

Par ailleurs, l'algorithme de discrimination délivre également une probabilité de confiance initiale associée à la scène détectée, qui sera stockée dans une mémoire MM2.

A cet égard l'élaboration de la probabilité de confiance initiale associée à la scène détectée est effectuée après la détection de la scène détectée et à partir de la connaissance de cette scène détectée, en particulier en effectuant un parcours supplémentaire dudit chemin avec la connaissance à chaque nœud, de la scène détectée.

D'autres algorithmes de classification ou classifieurs, différents des arbres de décision, et bien connus de l'homme du métier existent pour détecter des scènes. On peut citer notamment un algorithme du type réseau de neurones connu par l'homme du métier qui peut par exemple se référer à toutes fins utiles à l'ouvrage de Martin T Hagan et Howard B Demuth intitulé Neural Network Design (2^{nd} Edition), 1^{er} septembre 2014 ou encore un algorithme connu par l'homme du métier sous la dénomination GMM (« Gaussian Mixture Model »), l'homme du métier pouvant par exemple se référer à toutes fins utiles aux diapositives (tutorial slides) de Andrew Moore intitulées « Clustering with Gaussian Mixtures » disponibles sur le site internet https://www.autonlab.org/tutorials/gmm.html.

Ces deux algorithmes sont également configurés pour délivrer une probabilité de confiance initiale pour chaque scène détectée.

L'appareil APP comporte également des moyens de calcul MDC configurés pour mettre à jour ladite probabilité de confiance initiale.

Les moyens de calcul MDC comprennent un compteur MDC1 dont le rôle sera détaillé plus bas, une unité arithmétique et logique (ALU pour « Arithmetic-Logic Unit » en anglais) MDC2 configurée pour réaliser des opérations arithmétiques et des comparaisons.

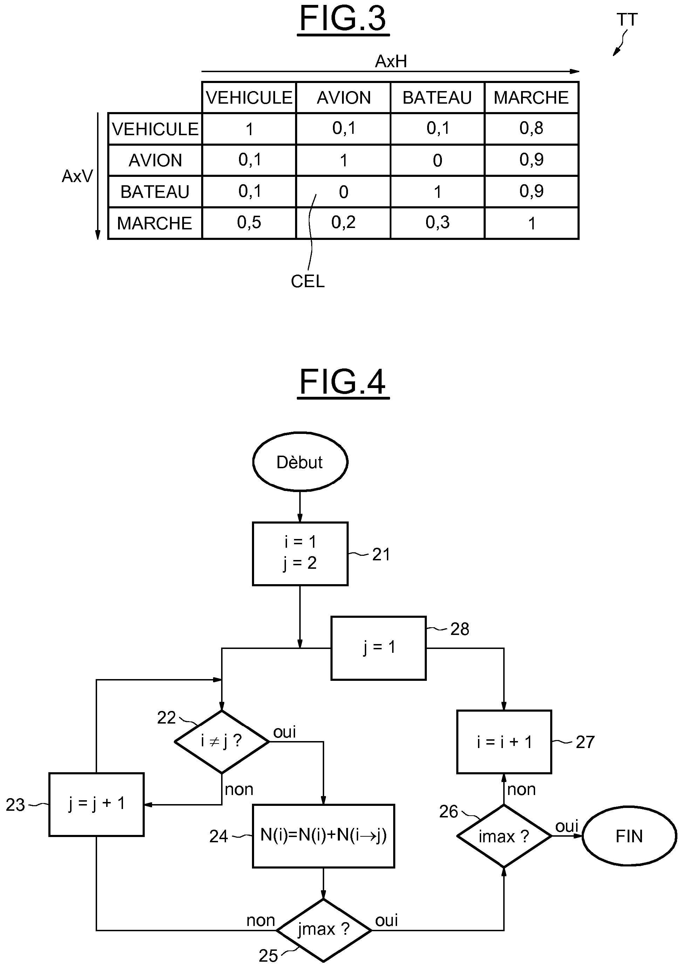

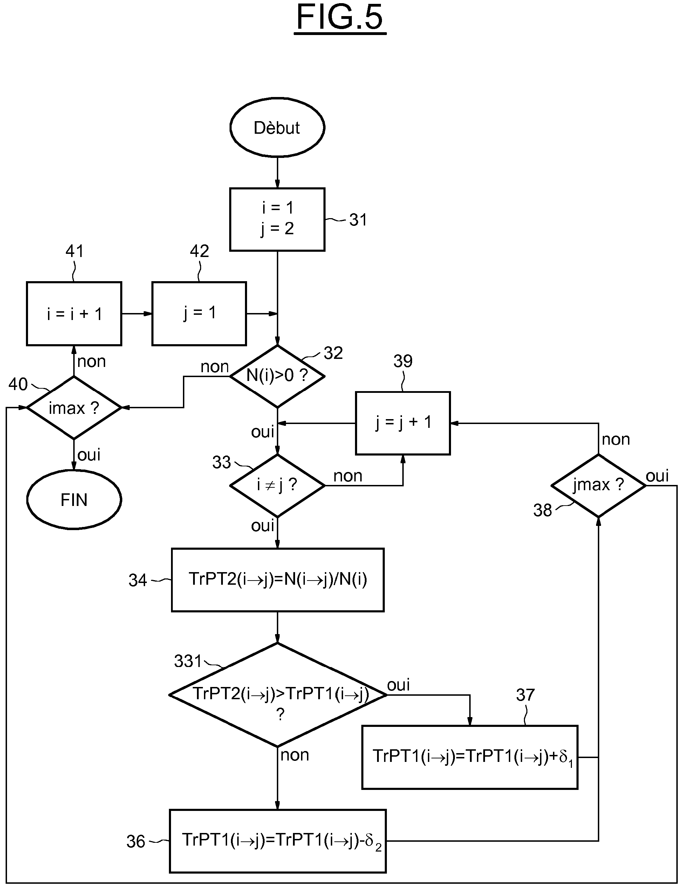

Les opérations réalisées par l'unité arithmétique et logique MDC2 seront détaillées dans les figures 4 et 5.

L'appareil APP comporte également un bloc BLC apte à coopérer avec les moyens de détection MDET pour traiter la scène détectée et transmettre les informations via l'antenne ANT de l'appareil.

Bien entendu, l'antenne est optionnelle si l'appareil n'est pas un appareil connecté.

L'appareil comporte également des moyens de contrôle MCTRL configurés pour activer successivement les moyens de détection MDET de façon à mettre en œuvre une succession d'étapes de détection de scènes mutuellement espacées d'intervalles temporels.

Ces différents moyens BLC, MDET, MCTRL, MDC et MFL peuvent être par exemple réalisés au moins en partie par des modules logiciels au sein d'un microprocesseur PR de l'appareil APP, par exemple le microprocesseur commercialisé par la société STMicroelectronics sous la référence STM32.

Comme illustré dans la figure 2, les moyens de filtrage MFL sont configurés pour réaliser un traitement par un filtrage 10 en utilisant par exemple un méta-filtre qui opère sur des décisions successives délivrées par l'algorithme de classification ALC, quel que soit son type et y compris un méta classifieur.

Le traitement par filtrage 10 est ici un traitement de filtrage temporel glissant des scènes détectées sur une fenêtre de filtrage de taille M à partir de l'identifiant de chaque nouvelle scène courante détectée prise en compte dans la fenêtre et d'une probabilité de confiance mise à jour PC2 associée à cette nouvelle scène détectée. Un tel traitement de filtrage est décrit dans la demande de brevet français précitée n°1754080 précitée.

Bien entendu, la valeur de M, qui définit notamment la latence du filtre, pourra être définie aisément par l'homme du métier en fonction de l'application envisagée.

La sortie du traitement de filtrage délivre successivement des scènes détectées filtrées 15.

A cet égard, un identifiant ID, par exemple un nombre, est affecté à chaque scène de référence.

On suppose ici qu'il y a quatre scènes de référence, à savoir les scènes « VEHICULE », « AVION », « BATEAU » et « MARCHE ».

La scène de référence « VEHICULE » a l'identifiant 1.

La scène de référence « AVION » a l'identifiant 2.

La scène de référence « BATEAU » a l'identifiant 3 et la scène de référence « MARCHE » a l'identifiant 4.

Par conséquent, puisque chaque scène détectée appartient à l'une des scènes de référence, l'identifiant de la scène courante détectée est un identifiant ayant la même valeur que l'une des scènes de référence.

La probabilité de confiance PC2 associée à la nouvelle scène détectée, est ici une probabilité de confiance mise à jour par une pondération 20 de la probabilité de confiance initiale PC1 délivrée par l'algorithme de discrimination ALC, par une première probabilité de transition TrPT1.

Cette mise à jour est effectuée par les moyens de calcul MDC.

Si la probabilité de confiance initiale PC1 n'est pas délivrée par l'algorithme de discrimination ALC, on considère qu'elle a une valeur arbitraire, fixée par exemple à 100%. Dans ce cas, la pondération par la première probabilité de transition TrPT1 est réalisée sur la probabilité de confiance ayant ladite valeur fixe.

Ladite première probabilité de transition TrPT1 permet de quantifier la probabilité que l'utilisateur passe d'une scène à une autre.

C'est avantageusement un paramètre à prendre en compte dans la détection de scènes car certaines transitions d'une scène à une autre sont peu probables, voire impossibles.

Ainsi, en prenant compte ladite première probabilité de transition TrPT1, la probabilité de confiance initiale PC1 associée à la scène courante détectée est affinée.

A cet égard, comme illustré sur la figure 3, ladite première probabilité de transition TrPT1 peut être extraite d'une table de transition TT stockée dans la mémoire MM3.

La table de transition TT est une table à deux dimensions. L'axe vertical AxV indique les scènes précédemment détectées et l'axe horizontal AxH indique les scènes courantes détectées.

Ainsi chaque cellule CEL de la table de transition TT indique la probabilité de transition d'une scène précédemment détectée vers une scène courante détectée.

Par exemple, la probabilité d'une transition de la scène précédemment détectée « VEHICULE » à la scène courante détectée « MARCHE » est de 0,8, ce qui représente une haute probabilité de transition.

Par contre, la probabilité d'une transition de la scène précédemment détectée « VEHICULE » à « BATEAU » est de 0,1, ce qui représente une probabilité faible et donc une transition improbable pour l'utilisateur détenant l'appareil APP.

Cette table peut être par exemple initialement prédéterminée en fonction des applications.

Bien évidemment, les habitudes de l'utilisateur détenant l'appareil APP sont amenées à évoluer.

Il est donc souhaitable de mettre à jour ladite probabilité de transition TrPT1 qui peut avoir une valeur arbitraire, pour garantir une bonne précision de la probabilité de confiance PC2.

Cette mise à jour est également effectuée par les moyens de calcul MDC.

On se réfère maintenant plus particulièrement aux figures 4 et 5 pour illustrer les différentes étapes de la mise à jour de ladite première probabilité de transition TrPT1, par un algorithme comprenant deux parties.

Avant toute mise à jour, une fenêtre d'observation non-glissante est activée.

Chaque occurrence de transition d'une première scène i vers une deuxième scène j, est accumulée en utilisant le compteur MDC1 pendant un intervalle de temps donné, correspondant à N transitions.

Ces N transitions sont avantageusement mémorisées sous la forme d'une liste dans la mémoire MM3.

Bien évidemment, le nombre N sera choisi par l'homme du métier en fonction du corpus de scènes de référence.

Une fois le nombre N qui correspond à N transitions, est atteint, les instructions de l'algorithme permettant la mise à jour de la table de transitions TT, sont lues.

On commence par une étape d'initialisation 21 de la valeur d'une première variable i à 1 correspondant à une première scène de référence portant l'identifiant 1, et de la valeur d'une deuxième variable j à 2 correspondant à une deuxième scène de référence portant l'identifiant 2.

L'étape 22 permet de vérifier si i est bien différent de j. Cela sera utile pour les prochaines instructions de l'algorithme.

Si i est différent de j, on parcourt la liste des N transitions pour compter, par exemple en utilisant le compteur MDC1, les occurrences N(i->j) d'une transition de la première scène de référence portant l'identifiant 1 vers la deuxième scène de référence portant l'identifiant 2.

La valeur de N(i->j) est mémorisée dans la mémoire MM3.

On incrémente, lors de l'étape 24, la valeur de N(i) avec i égal à 1, correspondant au nombre de transitions de la première scène de référence portant l'identifiant 1 vers chacune des scènes de référence possibles, du nombre d'occurrence N(i->j) de la première transition de la première scène de référence portant l'identifiant 1 vers la deuxième scène de référence portant l'identifiant 2.

La formule (I) mise en œuvre à l'étape 24 est en annexe.

La valeur de N(i) est mémorisée dans la mémoire MM3.

Ensuite, l'étape 25 permet de vérifier si j a atteint la valeur maximale, c'est à dire un nombre jmax correspondant au nombre de scènes de référence, c'est à dire 4 dans cet exemple.

La valeur maximale n'étant pas encore atteinte, on incrémente, dans l'étape 23 la valeur de j à 3 et on refait les mêmes opérations jusqu'à l'atteinte de la valeur maximale jmax de j, c'est à dire 4 dans cet exemple.

Dans ce cas, on vérifie, lors de l'étape 26, si la valeur maximale imax de i est atteinte, c'est à dire 4. Ceci permet de vérifier que l'algorithme a bien parcouru toutes les scènes de référence possibles.

Si ce n'est pas le cas, on réitère toutes les étapes décrites précédemment et on réinitialise la variable j à 1 lors de l'étape 28.

Ainsi, une fois toutes les scènes de références prises en compte, on exécute la deuxième partie de l'algorithme illustré sur la figure 5.

On commence par une étape d'initialisation 31 de la valeur de la première variable i à 1, correspondant à la première scène de référence portant l'identifiant 1, et de la valeur de la deuxième variable j à 2 correspondant à la deuxième scène de référence portant l'identifiant 2.

L'étape 32 vérifie si N(i) est supérieur 0. Autrement dit, on vérifie s'il y a eu une transition, durant l'intervalle donné, de la première scène de référence i avec i égal à 1, vers l'une quelconque des deuxièmes scènes de référence.

Si N(i) est supérieur à 0 on passe à l'instruction suivante représentée par l'étape 33 qui permet de vérifier si i est bien différent de j. Cela sera surtout utile pour les prochaines instructions de l'algorithme.

Si i est différent de j, l'unité arithmétique logique MDC2 réalise, dans l'étape 34 le calcul d'une deuxième probabilité de transition TrPT2(i->j) de la première scène de référence i avec i égal 1, correspondant à la première scène de référence portant l'identifiant 1, vers une deuxième scène de référence j avec j égal à 2, correspondant à la deuxième scène de référence portant l'identifiant 2.

Ce calcul (II) en annexe, est une division du nombre d'occurrence N(i->j) de la première transition de la première scène de référence portant l'identifiant 1 vers la deuxième scène de référence portant l'identifiant 2, par N(i) correspondant au nombre de transitions de la première scène de référence portant l'identifiant 1 vers chacune des scènes de référence possibles.

Ainsi, cette deuxième probabilité de transition TrPT2(i->j) sera comparée lors de l'étape 331, par l'unité arithmétique et logique MDC2, à la première probabilité de transition TrPT1(i->j).

Ainsi, si la deuxième probabilité de transition TrPT2(i->j) est supérieure à la première probabilité de transition TrPT1(i->j), on augmente la valeur de la première probabilité de transition TrPT1(i->j) d'une première valeur fixe *δ*₁, dans l'étape 37 (formule III en annexe).

La première valeur fixe *δ*₁ peut par exemple être comprise entre 0,01 et 0,05.

La première probabilité de transition TrPT1(i->j) est mise à jour et stockée dans la table de transition TT.

Sinon, on diminue la valeur de la première probabilité de transition TrPT1(i->j) d'une deuxième valeur fixe *δ*₂, dans l'étape 36 (formule IV en annexe).

La deuxième valeur fixe *δ*₂ peut par exemple être comprise entre 0,01 et 0,05.

La première probabilité de transition TrPT1(i->j) est mise à jour et stockée dans la table de transition TT.

Ensuite, l'étape 38 permet de vérifier si j a atteint la valeur maximale, c'est à dire le nombre jmax correspondant au nombre de scènes de référence, c'est à dire 4 dans cet exemple.

Si la valeur maximale jmax n'est pas encore atteinte, on incrémente dans l'étape 39 la valeur de j à 3 et on refait les mêmes opérations jusqu'à l'atteinte de la valeur maximale jmax de j, c'est à dire 4.

Dans ce cas, on vérifie, lors de l'étape 40, si la valeur maximale imax de i est atteinte, c'est à dire 4. Ceci permet de vérifier que l'algorithme a bien parcouru toutes les scènes de références possibles.

Si ce n'est pas le cas, on réitère toutes les étapes décrites précédemment et on réinitialise la variable j à 1.

Ainsi, une fois toutes les scènes de références prises en compte, il n'y a plus d'instructions à exécuter.

Par conséquent, toute transition entre une première scène i parmi l'ensemble de scènes de référence possibles vers une deuxième scène j parmi l'ensemble de scènes de référence, observée par la fenêtre d'observation non glissante durant un intervalle donné, permet de mettre à jour la probabilité de transition de la première scène i vers la deuxième scène j et ainsi affiner par la suite la probabilité de confiance délivrée par l'algorithme de discrimination ALC.

Par ailleurs, l'invention n'est pas limitée à ces modes de réalisation et de mise en œuvre mais en embrasse toutes les variantes.

Ainsi, la mise à jour de la probabilité de transition TrPT(i->j) pourrait être effectuée par tout autre algorithme à la portée de l'homme du métier, en particulier par un algorithme d'optimisation différentiable mettant en œuvre la formule (V) présentée en annexe.

### Annexe

$N \left(i\right) = {\sum }_{j = 1}^{4} N \left(i\to j\right)$ (I) $TrPT 1 \left(i\to j\right) = \frac{N \left(i\to j\right)}{N \left(i\right)}$ (II) $TrPT 1 \left(i\to j\right) = TrPT 1 \left(i\to j\right) + {δ}_{1}$ (III) $TrPT 1 \left(i\to j\right) = TrPT 1 \left(i\to j\right) - {δ}_{2}$ (IV) $TrPT 1 \left(i\to j\right) = TrPT 1 \left(i\to j\right) - δ \left(TrPT1\left(i\to j\right)-TrPT2\left(i\to j\right)\right)$ (V)

## Revendications

1. Procédé de contrôle d'une détection de scènes par un appareil (APP) parmi un ensemble de scènes de référence possibles, chaque scène de référence étant associée à un identifiant, une première probabilité de transition, TrPT1, étant définie pour chaque transition d'une première scène, i, parmi ledit ensemble de scènes de références possibles, vers une deuxième scène, j, parmi ledit ensemble de scènes de références possibles, le procédé comprenant :
- une détection de scènes parmi ledit ensemble de scènes de références possibles à des instants de détection successifs à l'aide d'au moins un algorithme de classification à partir de données de mesure des capteurs environnementaux, chaque nouvelle scène courante détectée étant affectée d'une probabilité de confiance initiale, PC1,
- une mise à jour de la probabilité de confiance initiale, PC1, en fonction de la première probabilité de transition, TrPT1, d'une scène précédemment détectée vers la nouvelle scène courante détectée, cette mise à jour comprenant une multiplication de ladite probabilité de confiance initiale, PC1, par ladite première probabilité de transition, TrPT1,
- un stockage de l'identifiant et de la probabilité de confiance mise à jour associés à chaque nouvelle scène courante détectée dans un registre à décalage de taille M formant une fenêtre de taille M permettant de stocker l'identifiant et la probabilité de confiance mise à jour de scènes détectées successivement, et
- un traitement de filtrage (10) de ces scènes détectées successivement à partir de l'identifiant et de la probabilité de confiance mise à jour, PC2, associés à chaque nouvelle scène courante détectée et stockés dans ledit registre, la sortie du traitement de filtrage délivrant successivement des scènes détectées filtrées (15) correspondant à des scènes possibles parmi lesdites scènes de référence, le procédé comprenant en outre une mise à jour de ladite première probabilité de transition, TrPT1, qui est effectuée si, durant un intervalle de temps donné, au moins une transition de la première scène, i, vers la deuxième scène, j, est effectuée, cette mise à jour comprenant :
- un calcul d'une deuxième probabilité de transition, TrPT2, en divisant un nombre d'occurrence de la transition de la première scène vers la deuxième scène par un nombre de transitions de la première scène de référence vers chacune des scènes de référence possibles, et
- une comparaison de ladite première probabilité de transition, TrPT1, par rapport à ladite deuxième probabilité de transition, TrPT2, la première probabilité de transition, TrPT1, étant mise à jour en fonction d'un résultat de cette comparaison, la mise à jour de la première probabilité de transition, TrPT1, comprenant :
une augmentation de sa valeur d'une première valeur fixe si ladite deuxième probabilité de transition, TrPT2, est supérieure à la première probabilité de transition, TrPT1, ou une diminution de sa valeur d'une deuxième valeur fixe si ladite deuxième probabilité de transition, TrPT2, est inférieure à la première probabilité de transition, TrPT1.

2. Procédé selon la revendication 1, comprenant en outre une normalisation de ladite probabilité de confiance mise à jour, PC2, associée à ladite nouvelle scène courante détectée.

3. Procédé selon l'une des revendications précédentes, dans lequel l'algorithme de classification délivre ladite probabilité de confiance initiale, PC1, associée à ladite nouvelle scène courante détectée.

4. Procédé selon l'une des revendications précédentes, dans lequel si l'algorithme de classification ne délivre pas ladite probabilité de confiance initiale, PC1, associée à ladite nouvelle scène courante détectée, on affecte à ladite nouvelle scène courante détectée une probabilité de confiance initiale ayant une valeur arbitraire.

5. Appareil (APP) comprenant :
- des moyens de définition d'une première probabilité de transition, TrPT1, pour chaque transition d'une première scène, i, parmi un ensemble de scènes de références possibles, vers une deuxième scène, j, parmi ledit ensemble de scènes de références possibles,
- des moyens de détection configurés pour détecter des scènes parmi ledit ensemble de scènes de références possibles à des instants de détection successifs à l'aide d'au moins un algorithme de classification à partir de données de mesure des capteurs environnementaux, chaque scène de référence étant associée à un identifiant, chaque nouvelle scène courante détectée étant affectée d'une probabilité de confiance initiale, PCl,
- des moyens de calcul (MDC) configurés pour mettre à jour ladite probabilité de confiance initiale, PC1, en fonction de la première probabilité de transition, TrPT1, d'une scène précédemment détectée vers la nouvelle scène courante détectée, cette mise à jour effectuant une multiplication de ladite probabilité de confiance initiale, PC1, par ladite première probabilité de transition, TrPT1,
- des moyens de stockage configurés pour stocker l'identifiant et la probabilité de confiance mise à jour associés à chaque nouvelle scène courante détectée dans un registre à décalage de taille M formant une fenêtre de taille M permettant de stocker l'identifiant et la probabilité de confiance mise à jour de scènes détectées successivement,
- des moyens de filtrage, FIL, configurés pour effectuer un traitement de filtrage (10) de ces scènes détectées successivement à partir de l'identifiant et de la probabilité de confiance mise à jour, PC2, associés à chaque nouvelle scène courante détectée, j, et stockés dans ledit registre et pour délivrer successivement des scènes détectées filtrées (15) correspondant à des scènes possibles parmi lesdites scènes de référence, et dans lequel les moyens de calcul (MDC) sont configurés pour mettre à jour ladite première probabilité de transition, TrPT1, est effectuée si, durant un intervalle de temps donné, au moins une transition de la première scène, i, vers la deuxième scène, j, est effectuée, cette mise à jour comprenant :
- un calcul d'une deuxième probabilité de transition, TrPT2, en divisant un nombre d'occurrences de la transition de la première scène vers la deuxième scène par un nombre de transitions de la première scène de référence vers chacune des scènes de référence possibles, et
- une comparaison de ladite première probabilité de transition, TrPT1, par rapport à ladite deuxième probabilité de transition, TrPT2, la première probabilité de transition, TrPT1, étant mise à jour en fonction d'un résultat de cette comparaison dans lequel les moyens de calcul (MDC) sont configurés pour mettre à jour de la première probabilité de transition, TrPT1, en augmentant sa valeur d'une première valeur fixe si ladite deuxième probabilité de transition, TrPT2, est supérieure à la première probabilité de transition, TrPT1, ou mettre à jour de la première probabilité de transition, TrPT1, en diminuant sa valeur d'une deuxième valeur fixe si ladite deuxième probabilité de transition, TrPT2, est inférieure à la première probabilité de transition (TrPT1). TrPT1.

6. Appareil selon la revendication 5, dans lequel les moyens de calcul (MDC) sont configurés pour normaliser ladite probabilité de confiance mise à jour, PC2, associée à ladite nouvelle scène courante détectée.

7. Appareil (APP) selon l'une des revendications 5 ou 6, dans lequel l'algorithme de classification est configuré pour délivrer ladite probabilité de confiance initiale, PC1, associée à ladite nouvelle scène courante détectée.

8. Appareil (APP) selon l'une des revendications 5 à 7, dans lequel si l'algorithme de classification n'est pas configuré pour délivrer ladite probabilité de confiance initiale, PC1, associée à ladite nouvelle scène courante détectée, une probabilité de confiance initiale ayant une valeur arbitraire est affectée à ladite nouvelle scène courante détectée.

9. Appareil (APP) selon l'une des revendications 5 à 8, étant un téléphone mobile cellulaire ou une tablette numérique ou une montre intelligente.

## Patentansprüche

1. Verfahren zur Steuerung einer Szenenerkennung durch ein Gerät (APP) aus einem Satz möglicher Referenzszenen, wobei jede Referenzszene einer Kennung zugeordnet ist, wobei eine erste Übergangswahrscheinlichkeit, TrPT1, für jeden Übergang einer ersten Szene, i, aus dem Satz möglicher Referenzszenen zu einer zweiten Szene, j, aus dem Satz möglicher Referenzszenen definiert ist, wobei das Verfahren umfasst:
- Erkennen von Szenen aus dem Satz von Referenzszenen, die zu aufeinanderfolgenden Erkennungszeitpunkten möglich sind, mithilfe mindestens eines Klassifizierungsalgorithmus anhand von Messdaten der Umgebungssensoren, wobei jeder neu erkannten aktuellen Szene eine anfängliche Vertrauenswahrscheinlichkeit, PC1, zugewiesen wird,
- Aktualisieren der anfänglichen Vertrauenswahrscheinlichkeit, PC1, in Abhängigkeit von der ersten Übergangswahrscheinlichkeit, TrPT1, einer zuvor erkannten Szene in die neue erkannte aktuelle Szene, wobei diese Aktualisierung eine Multiplikation der ursprünglichen Vertrauenswahrscheinlichkeit, PC1, mit der ersten Übergangswahrscheinlichkeit, TrPT1, umfasst,
- Speichern der Kennung und der aktualisierten Vertrauenswahrscheinlichkeit, die jeder neu erkannten aktuellen Szene zugeordnet ist, in einem Schieberegister der Größe M, das ein Fenster der Größe M bildet, das es ermöglicht, die Kennung und die aktualisierte Vertrauenswahrscheinlichkeit von nacheinander erkannten Szenen zu speichern, und
- Filterverarbeitung (10) dieser nacheinander erkannten Szenen anhand der Kennung und der aktualisierten Vertrauenswahrscheinlichkeit, PC2, die jeder neu erkannten aktuellen Szene zugeordnet und in dem Register gespeichert sind, wobei die Ausgabe der Filterverarbeitung nacheinander gefilterte erkannte Szenen (15) liefert, die möglichen Szenen unter den Referenzszenen entsprechen, wobei das Verfahren ferner das Aktualisieren der ersten Übergangswahrscheinlichkeit, TrPT1, umfasst, die durchgeführt wird, wenn während eines bestimmten Zeitintervalls mindestens ein Übergang von der ersten Szene, i, zu der zweiten Szene, j, durchgeführt wird, wobei diese Aktualisierung Folgendes umfasst:
- Berechnen einer zweiten Übergangswahrscheinlichkeit, TrPT2, indem eine Anzahl von Vorkommen des Übergangs von der ersten Szene zu der zweiten Szene durch eine Anzahl von Übergängen von der ersten Referenzszene zu jeder der möglichen Referenzszenen geteilt wird, und
- Vergleichen der ersten Übergangswahrscheinlichkeit, TrPT1, mit der zweiten Übergangswahrscheinlichkeit, TrPT2, wobei die erste Übergangswahrscheinlichkeit, TrPT1, basierend auf einem Ergebnis dieses Vergleichs aktualisiert wird, wobei die Aktualisierung der ersten Übergangswahrscheinlichkeit, TrPT1, Folgendes umfasst:
Erhöhen ihres Wertes um einen ersten festen Wert, wenn die zweite Übergangswahrscheinlichkeit, TrPT2, größer ist als die erste Übergangswahrscheinlichkeit, TrPT1, oder Verringern ihres Wertes um einen zweiten festen Wert, wenn die zweite Übergangswahrscheinlichkeit, TrPT2, kleiner ist als die erste Übergangswahrscheinlichkeit, TrPT1.

2. Verfahren nach Anspruch 1, ferner umfassend das Normalisieren der aktualisierten Vertrauenswahrscheinlichkeit, PC2, die der neu erkannten aktuellen Szene zugeordnet ist.

3. Verfahren nach einem der vorhergehenden Ansprüche, wobei der Klassifizierungsalgorithmus die anfängliche Vertrauenswahrscheinlichkeit, PC1, die der neu erkannten aktuellen Szene zugeordnet ist, liefert.

4. Verfahren nach einem der vorhergehenden Ansprüche, wobei, wenn der Klassifizierungsalgorithmus die anfängliche Vertrauenswahrscheinlichkeit, PC1, die der neu erkannten aktuellen Szene zugeordnet ist, nicht liefert, der neu erkannten aktuellen Szene eine anfängliche Vertrauenswahrscheinlichkeit mit einem willkürlichen Wert zugewiesen wird.

5. Gerät (APP), umfassend:
- Mittel zum Definieren einer ersten Übergangswahrscheinlichkeit, TrPT1, für jeden Übergang einer ersten Szene, i, aus einem Satz möglicher Referenzszenen zu einer zweiten Szene, j, aus dem Satz möglicher Referenzszenen,
- Detektionsmittel, die so konfiguriert sind, dass sie Szenen aus dem Satz möglicher Referenzszenen, die zu aufeinanderfolgenden Erkennungszeitpunkten möglich sind, mithilfe mindestens eines Klassifizierungsalgorithmus anhand von Messdaten der Umgebungssensoren detektieren, wobei jede Referenzszene einer Kennung zugeordnet ist, wobei jeder neu erkannten aktuellen Szene eine anfängliche Vertrauenswahrscheinlichkeit, PC1, zugewiesen wird,
- Berechnungsmittel (MDC), die so konfiguriert sind, dass sie die anfängliche Vertrauenswahrscheinlichkeit, PC1, in Abhängigkeit von der ersten Übergangswahrscheinlichkeit, TrPT1, einer zuvor erkannten Szene in die neu erkannte aktuelle Szene aktualisieren, wobei diese Aktualisierung eine Multiplikation der ursprünglichen Vertrauenswahrscheinlichkeit, PC1, mit der ersten Übergangswahrscheinlichkeit, TrPT1, durchführt,
- Speichermittel, die so konfiguriert sind, dass sie die Kennung und die aktualisierte Vertrauenswahrscheinlichkeit, die jeder neu aktuellen erkannten Szene zugeordnet ist, in einem Schieberegister der Größe M speichern, das ein Fenster der Größe M bildet, das es ermöglicht, die Kennung und die aktualisierte Vertrauenswahrscheinlichkeit von nacheinander erkannten Szenen zu speichern,
- Filtermittel, FIL, die so konfiguriert sind, dass sie eine Filterverarbeitung (10) dieser nacheinander erkannten Szenen anhand der Kennung und der aktualisierten Vertrauenswahrscheinlichkeit, PC2, durchzuführen, die jeder neu erkannten aktuellen Szene, j, zugeordnet und in dem Register gespeichert sind, und nacheinander gefilterte erkannte Szenen (15) liefern, die möglichen Szenen unter den Referenzszenen entsprechen,
und wobei die Berechnungsmittel (MDC) so konfiguriert sind, dass sie die erste Übergangswahrscheinlichkeit, TrPT1, aktualisieren, wenn sie während eines bestimmten Zeitintervalls mindestens einen Übergang von der ersten Szene, i, zu der zweiten Szene, j, durchführen, wobei diese Aktualisierung Folgendes umfasst:
- Berechnen einer zweiten Übergangswahrscheinlichkeit, TrPT2, indem eine Anzahl von Vorkommen des Übergangs von der ersten Szene zu der zweiten Szene durch eine Anzahl von Übergängen von der ersten Referenzszene zu jeder der möglichen Referenzszenen geteilt wird, und
- Vergleichen der ersten Übergangswahrscheinlichkeit, TrPT1, mit der zweiten Übergangswahrscheinlichkeit, TrPT2, wobei die erste Übergangswahrscheinlichkeit, TrPT1, basierend auf einem Ergebnis dieses Vergleichs aktualisiert wird, wobei die Berechnungsmittel (MDC) so konfiguriert sind, dass sie die erste Übergangswahrscheinlichkeit, TrPT1, durch Erhöhen ihres Wertes um einen ersten festen Wert aktualisieren, wenn die zweite Übergangswahrscheinlichkeit, TrPT2, größer ist als die erste Übergangswahrscheinlichkeit, TrPT1, oder die erste Übergangswahrscheinlichkeit, TrPT1, durch Verringern ihres Wertes um einen zweiten festen Wert aktualisieren, wenn die zweite Übergangswahrscheinlichkeit, TrPT2, kleiner ist als die erste Übergangswahrscheinlichkeit (TrPT1), TrPT1.

6. Gerät nach Anspruch 5, wobei die Berechnungsmittel (MDC) so konfiguriert sind, dass sie die aktualisierte Vertrauenswahrscheinlichkeit, PC2, die der neu erkannten aktuellen Szene zugeordnet ist, normalisieren.

7. Gerät (APP) nach einem der Ansprüche 5 oder 6, wobei der Klassifizierungsalgorithmus so konfiguriert ist, dass er die anfängliche Vertrauenswahrscheinlichkeit, PC1, die der neu erkannten aktuellen Szene zugeordnet ist, liefert.

8. Gerät (APP) nach einem der Ansprüche 5 bis 7, wobei, wenn der Klassifizierungsalgorithmus nicht so konfiguriert ist, dass er die anfängliche Vertrauenswahrscheinlichkeit, PC1, die der neu erkannten aktuellen Szene zugeordnet ist, liefert, der neu erkannten aktuellen Szene eine anfängliche Vertrauenswahrscheinlichkeit mit einem willkürlichen Wert zugewiesen wird.

9. Gerät (APP) nach einem der Ansprüche 5 bis 8, wobei es sich um ein Mobiltelefon oder ein digitales Tablet oder eine Smartwatch handelt.

## Claims

1. A method for controlling a scene detection by a device (APP) from a set of possible reference scenes, each reference scene being associated with an identifier, a first transition probability, TrPT1, being defined for each transition from a first scene, i, among said set of possible reference scenes, to a second scene, j, among said set of possible reference scenes, the method comprising:
- detecting scenes from said set of possible reference scenes at successive detection instants using at least one classification algorithm from measurement data of the environmental sensors, each newly detected current scene being assigned an initial confidence probability, PC1,
- updating the initial confidence probability, PC1, according to the first transition probability, TrPT1, from a previously detected scene to the newly detected current scene, this updating comprising multiplying said initial confidence probability, PC1, by said first transition probability, TrPT1,
- storing the identifier and the updated confidence probability, which are associated with each newly detcted current scene in an M-sized shift register forming an M-sized window capable of storing the identifier and the updated confidence probability of successively detected scenes, and
- filter processing (10) these successively detected scenes based on the identifier and updated confidence probability, PC2, which are associated with each newly detected current scene and stored in said register, the output of the filter processing successively delivering filtered detected scenes (15) corresponding to possible scenes among said reference scenes,
the method further comprising updating said first transition probability, TrPT1, which is performed if, during a given time interval, at least one transition from the first scene, i, to the second scene, j, is performed, this updating comprising:
- calculating a second transition probability, TrPT2, by dividing a number of occurrences of the transition from the first scene to the second scene by a number of transitions from the first reference scene to each of the possible reference scenes, and
- comparing said first transition probability, TrPT1, with said second transition probability, TrPT2, the first transition probability, TrPT1, being updated on the basis of the result of this comparison, the updating of the first transition probability, TrPT1, comprising:
increasing its value by a first fixed value if said second transition probability, TrPT2, is greater than the first transition probability, TrPT1, or decreasing its value by a second fixed value if said second transition probability, TrPT2, is less than the first transition probability, TrPT1.

2. The method of claim 1, further comprising normalising said confidence probability, PC2, updated, associated with said newly detected current scene.

3. The method according to one of the preceding claims, wherein the classification algorithm delivers said initial confidence probability, PC1, associated with said newly detected current scene.

4. The method according to one of the preceding claims, wherein if the classification algorithm does not deliver said initial confidence probability, PC1, associated with said newly detected current scene, said newly detected current scene is assigned an initial confidence probability having an arbitrary value.

5. A device (APP) comprising:
- means for defining a first transition probability, TrPT1, for each transition of a first scene, i, from a set of possible reference scenes, to a second scene, j, from said set of possible reference scenes,
- detection means configured to detect scenes among said set of possible reference scenes at successive detection instants using at least one classification algorithm from measurement data of the environmental sensors, each reference scene being associated with an identifier, each newly detected current scene being assigned an initial confidence probability, PC1,
- calculation means (MDC) configured to update said initial confidence probability, PC1, according to the first transition probability, TrPT1, from a previously detected scene to the newly detected current scene, this updating performing a multiplication of said initial confidence probability, PC1, by said first transition probability, TrPT1,
- storage means configured to store the identifier and the updated confidence probability, which are associated with each newly detected current scene in an M-sized shift register forming an M-sized window capable of storing the identifier and the updated confidence probability of successively detected scenes,
- filtering means, FIL, configured to perform filter processing (10) of these successively detected scenes based on the identifier and updated confidence probability, PC2, which are associated with each newly detected current scene, j, and stored in said register and to successively deliver filtered detected scenes (15) corresponding to possible scenes among said reference scenes,
and wherein the calculation means (MDC) are configured to update said first transition probability, TrPT1, which is performed if, during a given time interval, at least one transition from the first scene, i, to the second scene, j, is performed, this updating comprising:
- calculating a second transition probability, TrPT2, by dividing a number of occurrences of the transition from the first scene to the second scene by a number of transitions from the first reference scene to each of the possible reference scenes, and
- comparing said first transition probability, TrPT1, with respect to said second transition probability, TrPT2, the first transition probability, TrPT1, being updated according to a result of this comparison wherein the calculation means (MDC) are configured to update the first transition probability, TrPT1, by increasing its value by a first fixed value if said second transition probability, TrPT2, is greater than the first transition probability, TrPT1, or update the first transition probability, TrPT1, by decreasing its value by a second fixed value if said second transition probability, TrPT2, is less than the first transition probability (TrPT1), TrPT1.

6. The apparatus of claim 5, wherein the calculation means (MDC) are configured to normalise said confidence probability, PC2, updated, associated with said newly detected current scene.

7. The apparatus (APP) according to one of claims 5 or 6, wherein the classification algorithm is configured to deliver said initial confidence probability, PC1, associated with said newly detected current scene.

8. The apparatus (APP) according to one of claims 5 to 7, wherein if the classification algorithm is not configured to deliver said initial confidence probability, PC1, associated with said newly detected current scene, an initial confidence probability having an arbitrary value is assigned to said newly detected current scene.

9. The apparatus (APP) according to one of claims 5 to 8, being a cellular mobile phone or a digital tablet or smart watch.
